# EUROPEAN PATENT SPECIFICATION

(11) **EP 3 134 814 B1**
(45) Date of publication and mention of the grant of the patent: **17.11.2021**
(21) Application number: 14734945.0
(22) Date of filing: 23.04.2014
(51) Int. Cl.: G06F 9/52

(54) **PROGRAM PARALLELIZATION ON PROCEDURE LEVEL IN MULTIPROCESSOR SYSTEMS WITH LOGICALLY SHARED MEMORY**
PROGRAMMPARALLELISIERUNG AUF VERFAHRENSEBENE IN MULTIPROZESSORSYSTEMEN MIT LOGISCH GETEILTEM SPEICHER
PARALLÉLISATION DE PROGRAMME AU NIVEAU DE LA PROCÉDURE DANS DES SYSTÈMES À MULTIPLES PROCESSEURS AVEC MÉMOIRE À PARTAGE LOGIQUE

(43) Date of publication of application: 01.03.2017
(73) Proprietor: Sciensys, 75016 Paris (FR)
(72) Inventor: STARIKOV, Evgeny Veniaminovich, Moscow 117312 (RU)
(74) Representative: Reinhardt, Yves
(86) International application number: PCT/RU2014/000296
(87) International publication number: WO 2015/163780

(56) References cited:
- US-A1- 2011 252 264
- US-A1- 2012 096 474
- US-A1- 2013 125 133
- "Executing a Program on the MIT Tagged-Token Dataflow Architecture", IEEE TRANSACTIONS ON COMPUTERS, 1 January 1990 (1990-01-01), XP055148681, Retrieved from the Internet: URL:http://ieeexplore.ieee.org/ielx1/12/18 17/00048862.pdf?tp=&arnumber=48862&isnumbe r=1817 [retrieved on 2014-10-30]
- Liberios Vokorokos ET AL: "Paralelization of the Sequantial Threads in DF Computers", 3th Slovakian-Hungarian Joint Symposium on Applied Machine Intelligence, 21 January 2005 (2005-01-21), pages 207-215, XP055148688, Retrieved from the Internet: URL:http://conf.uni-obuda.hu/SAMI2005/VOKO ROKOS.pdf [retrieved on 2014-10-24]
- O'GRADY E P: "Interprocessor Communication In Multiprocessor Simulation Systems", 19790904; 19790904 - 19790907, 4 September 1979 (1979-09-04), pages 300-306, XP010300632,

## Description

### FIELD OF THE INVENTION

The invention relates to data processing and more particularly to parallel processing of data.

### BACKGROUND OF THE INVENTION

The contemporary trend in the data processing field is to provide for always increased speed and capacity of processing data. As a consequence, parallel processing systems have been developed over the last decades with more or less success. The most known approaches are, on the one hand, superscalar and Very Long Instruction Word (VLIW) processors and, on the other hand, symmetrical multiprocessing (SMP), Non-Uniform Memory Access (NUMA) based systems.

The main drawbacks of existing SMPs are the followings:
- the bottleneck in the scalability due to limited bandwidth and high power consumption of buses and switches used for interconnection purpose;
- programming difficulties due to necessity of programming both the CPUs and the interconnection logic;
- if contemplating to design a single programming language, it would have to be able to not only partition the workload, but also to comprehend the memory locality;
- system programmers have to build support for SMP into the operating system: otherwise, the additional processors would remain idle and the system would work as a uniprocessor system;
- the complexity of the instruction sets.

The main drawbacks of the VLIW processor technology are the followings:
- the operation of VLIW systems depend on the programs themselves providing all the decisions regarding which instructions are to be executed simultaneously and how conflicts are to be resolved, thus adding to the complexity of the code to be written;
- the compilers are more complex than those for other types of systems, as compilers gave to be able to spot relevant source code constructs and generate target code that duly uses the advanced possibilities of the CPUs;
- programmers must be able to express their algorithms in a manner that facilitates the task of the compiler, thus adding to the complexity of the programming language used.

The main drawbacks of superscalar systems are the followings:
- the degree of intrinsic parallelism in the instruction stream (instructions requiring the same computational resources from the CPU) heavily impact the abilities of a superscalar CPU;
- the complexity and time cost of the dispatcher and associated dependency checking logic increases hardware requirements and complexity of the CPU;
- the branch instruction processing is a heavy time-consuming task.

The main drawbacks of NUMA systems are the followings:
- CPU and/or node caches can result in NUMA effects: for example, the CPUs on a particular node have a higher bandwidth and/or a lower latency to access the memory and CPUs on that same node: as a result, lock starvation under high contention may occur because if a CPUx in the node requests a lock already held by another CPUy in the node, its request will tend to beat out a request from a remote CPUz;
- it requires multiple caches (or even multiple caches for the same memory location in case of ccNUMA) and a complex cache coherency checking hardware due to data being spread across different memory banks;
- the programming is more complex than for SMP systems.

Another approach was proposed which relies on data-flow based processing. For instance, RU 2 281 546 C1 discloses a multiprocessing system making use of associative memory modules for implementing data flow processing. Although it is advantageous, the architecture disclosed in RU 2 281 546 C1 has some limitations. In particular, the high power consumption and heat radiation of the associative memory modules limits *de facto* the number of modules that can be actually implemented. Further, it lacks of flexibility regarding the structure of data streams involved in the data flow processing because of the size of the fields in the data streams that is limited by the hardware design of the associative memory modules. Furthermore, it is only able to run programs written according to the data flow principles, while it may also be desirable to run programs according to the control flow principles which is sometime more efficient than data flow principle or because it is desirable to run a program that has already been written according to the control flow principles.

It is also known a machine with purely data-driven instruction scheduling from the article "Executing a Programm on the MIT Tagged-Token Dataflow Architecture", IEEE Transactions on Computers, 01.01.1990, pages 300-318.

### SUMMARY OF THE INVENTION

The aim of the present invention is to alleviate at least partly the above-mentioned drawbacks. More particularly, the invention aims to provide a simple and effective solution for parallelizing tasks on a data processing system.

This aim is achieved with the different aspects of the invention which are defined in the independent claims. Preferred embodiments are defined in the dependent claims. Further preferred embodiments, features and advantages of the invention will appear from the following description of embodiments of the invention, given as non-limiting examples, with reference to the accompanying drawings listed hereunder.

### BRIEF DESCRIPTION OF THE DRAWINGS

Fig. 1 illustrates schematically the architecture of a data processing system according to a preferred embodiment of the invention.
Fig. 2 illustrates the structure of a data stream sent by an execution unit to another execution for causing the latter to execute a procedure identified in the data stream.
Fig.3 illustrates the structure of tokens used for synchronizing a program with procedures it has called.
Fig. 4a shows a flow chart of a program causing procedures to be executed on other EUs and Fig. 4b a flow chart of such a procedure, both making use of tokens of Fig. 3 for synchronizing purpose.
Fig. 5 illustrates a data flow graph for purpose of explaining the data flow processing principles.

### DETAILED DESCRIPTION OF THE INVENTION

### Architecture of the data processing system

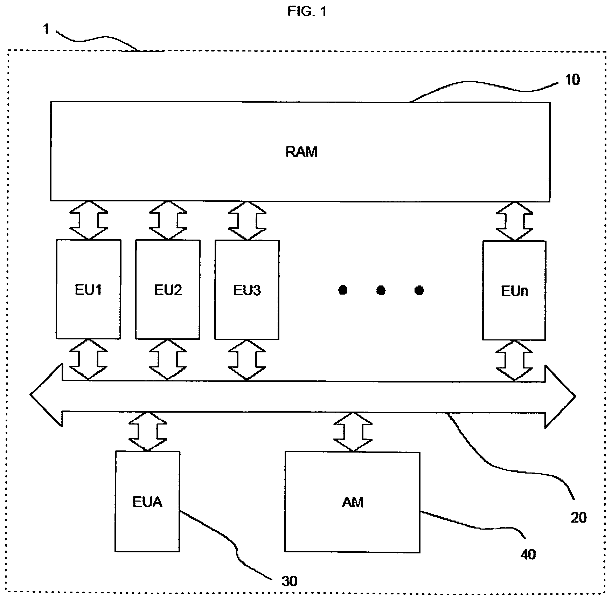

Fig. 1 illustrates schematically the functional blocks of a data processing system 1 - abbreviated hereafter as DPS 1 - according to a preferred embodiment of the invention.

DPS 1 is primarily designed as a symmetrical processing system. Thus, DPS 1 comprises a plurality of executive units EU1, EU2, ..., EUn. Each executive unit - hereafter abbreviated EU - comprises a computational unit such as an arithmetic and logic unit (ALU). Each EU has access to a shared RAM memory 10 of DPS 1. DPS 1 may also comprise some shared ROM memory (not shown) which can be accessed by each EU. Each EU is able to perform any data processing task required by the program(s) being executed on DPS 1, this independently from the other EUs. Thereby, the EUs provide the ability for parallel processing. All of the EUs are preferably identical. One will understand that each EU may correspond to a single core microprocessor and/or to a respective core of a multicore microprocessor.

DPS 1 further comprises an interconnection arrangement 20 (hereafter IA). All the EUs are connected to IA 20 which enables any EU to send data to any other EU.

More precisely, DPS 1 is arranged for enabling any EU to send data to any free EU. One will understand that an EU is free at a given time if it is not executing any program at that time. Therefore, DPS 1 comprises an execution unit arbiter 30, abbreviated hereafter as EUA 30.

EUA 30 manages and holds up to date a list of free EUs. When an EU - hereafter noted EUi - wants to send data to any free EU, it sends a corresponding request to EUA 30. EUA 30 selects one of the free EUs in its list and returns the index of the selected free EU, hereafter noted EUj. As a consequence, EUA 30 removes EUj from its list of free EUs, i.e. EUj is considered being busy from now on. Further, connection is established between EUi and EUj through IA 20. As connection is established between them, EUi is able to send its data to EUj. Once EUi has finished to send data to EUj, it closes the connection. On the other hand, EUj processes the data received form EUi as will be described more in detail later. When EUj has finished to process the data received from EUi, it informs EUA 30 that it is again free. EUA 30 accordingly updates the list of free EUs by adding in it EUj. Of course, one will understand that if no EU is free at the time EUi sends the request to EUA 30, EUA 30 will not be able to return immediately the index of a free EU and thus EUi will have to wait until an EU gets free.

Further, DPS 1 may advantageously be arranged for enabling any EU to send data to a specifically selected EU. This may be done with the help of EUA 30. In other words, when an EU ― hereafter noted EUi - wants to send data to a specific EU noted hereafter EUj, it sends a corresponding request to EUA 30. EUA 30 checks whether EUj is free and if so, allows connection of EUi to EUj via IA 30 for sending data to it.

One will understand that IA 20 and EUA 30 may be implemented in hardware in different ways. According to a preferred embodiment, IA 20 is implemented as a crossbar, also called matrix switch. A crossbar is a hardware module that provides connection of any of its inputs to any of its outputs. Crossbars are known *per se.* The output of each EU is connected to a respective input of the crossbar while the input of each EU is connected to a respective output of the crossbar. In this case, EUA 30 is preferably implemented in the inner logic of the crossbar. In other words, the inner logic of the crossbar gives the ability to identify a free EU and commutate the input of the free EU with the output of the EU that has requested to connect to a free EU. According to another embodiment, IA 20 is implemented as a bus, being reminded that buses are known *per se.*

It is preferred that DPS 1 also comprises an associative memory 40, abbreviated hereafter AM 40. It is reminded that associative memory, also referred to as content-addressable memory, is a special type of memory usually used in certain very high speed searching applications. Unlike standard computer memory - i.e. random access memory (commonly abbreviated RAM) - in which the user supplies a memory address and the RAM returns the data word stored at that address, an AM is designed such that the user supplies a data word and the AM searches its memory to determine if that data word is stored anywhere in it. If the data word is found, the associative memory returns a list of one or more storage addresses where the word was found (and in some architectures, it also returns the data word, or other associated pieces of data).

Regarding DPI, one will understand that AM 40 is provided from a functional point of view, independently from its practical implementation. In other words, AM 40 is not necessarily implemented as an associative memory module, i.e. a hardware component implementing the mentioned search function at hardware level in which the search is carried out simultaneously on all the searchable content. Such an associative memory module is very fast. However, it has limited storage capacity and executes a given search algorithm without flexibility. Further, it has high power consumption and heat radiation and takes up a considerable area of crystal.

For these reasons, it is preferable that AM 40 be implemented in software by using RAM, preferably shared RAM 10. Software implemented associative memory, also called pseudo-associative memory (hereafter abbreviated as PAM), are known *per se.* PAM usually uses a hash algorithm for searching, and may have large storage capacity. One will understand that AM 40 can be implemented as a PAM using another technique than a hash table for carrying out the content based search through AM 40. For instance, it may be contemplated to use a hierarchical hash-tree search.

One will understand that the access path of the EUs to shared RAM 10 may be independent from IA 20 as suggested in Fig. 1. Alternatively, the access path of the EUs to shared RAM 10 could be provided by IA 20.

One will also understand that DPS 1 comprises also input/output modules (hereafter I/O modules), although they are not depicted in Fig. 1. The I/O modules are known *per se* and allow any EU of DPS 1 to access to any peripheral device via the corresponding I/O module. Similarly to RAM 10, the I/O modules may be connected to IA 20 through which the EUs may access them. Alternatively, the I/O modules may be connected to another interconnection arrangement than IA 20, for example a bus which may be the same as the one connecting RAM 10 to the EUs or a distinct one. One will also understand that the EUs may have cache memory as is known in the art.

### Method for parallelizing of tasks

In the prior art, there are mainly two ways to parallelize the computational process. The first way is on instruction level, which is used in superscalar and VLIW processors. The second way is on task level, which is used in multiprocessor systems: It is based on partitioning of tasks into subtasks and executing each task on a separate processor.

According to an advantageous aspect, the invention proposes a different approach which consists in parallelizing tasks on procedure level. The main principle is the possibility of calling a procedure with an arbitrary number of parameters on any free EU of DPS 1. Furthermore, the procedure can be called either directly - i.e. by the program or procedure run on an EU - or using the principle of data availability, where the procedure is called automatically when all of its input parameters have been set. We will successively describe both methods.

### 1) Direct call of a procedure on any free EU

A program (or a procedure) that is executed on an EU - hereafter EUi - may call a node procedure without executing it itself, but cause another EU to execute it. This other EU may be any free EU. Therefore, EUi sends a request to EUA 30 as explained above. Alternatively, the other EU could be one specified by EUi instead of being any free EU. For the sake of explanation, let's identify the other EU as being EUj. Once EUi has requested EUj to execute the node procedure, it does not wait for this node procedure to be actually executed, but continues to execute its own program. In other words, after having executed the call instruction, EUi will execute the next instruction of its program without waiting for the called node procedure to be executed by EUj. As a consequence, hardware parallelization of the program is automatically obtained. Once the node procedure was executed by EUj - i.e. after all the node outputs were calculated and sent to subsequent nodes if relevant - EUj is halted and identified as free by EUA 30. In other words, EUj is again available for executing another node procedure.

We will describe now in more detail how a program (or a procedure) run by an EU may cause another EU to execute a procedure. Let's assume that the program is run on EUi. The program can contain a procedure call instruction for causing a procedure ― noted Px herafter - to be executed on any other free EU. When EUi executes the procedure call instruction of the program, EUi requests EUA 30 to identify it a free EU, noted EUj hereafter. As a consequence, EUi sends a stream of data to EUj via IA 20. This stream of data contain all information required by EUj for causing EUj to execute procedure Px. Once this data stream sent to EUj, EUi continues to execute its program, i.e. it executes the subsequent instructions of its program without waiting that EUj has actually executed procedure Px.

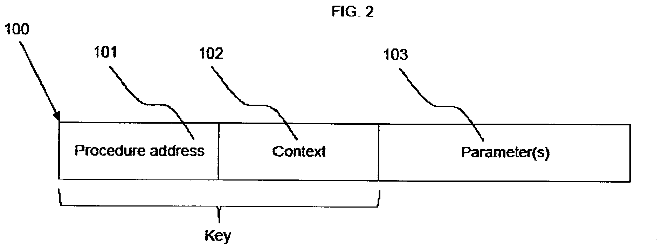

Fig. 2 shows schematically the structure of the data stream 100 sent by EUi to EUj for causing the latter to execute procedure Px. A predefined location 101 in the data stream contains the address of procedure Px in RAM 10. Another predefined location 102 contains context information. Context information is preferably defined by the calling program run on EUi prior to sending the data stream 100 to EUj. Context information is used for identification purpose of the block of program (run on EUi in our example) which calls one or several procedures on other EUs (procedure Px to be executed on EUj in our example). Context information may notably serve for synchronization purpose of the calling procedure with the called procedure(s) as we will see later. It may also serve when an exception is triggered on an EU or if the calling procedure wants to end the execution of all procedures in the given block on other EUs. The remainder of the data stream contains parameters that are required for the execution of procedure Px. These parameters may be of any kind depending on the requirement of the procedure: numbers, strings, etc. One will understand that the length of the data stream is not necessarily predetermined and the same for all procedures. On the contrary, it can be of any length appropriate for providing the required parameter(s) to the corresponding procedure. The procedure and thus the required parameters may be defined by the user.

As mentioned, once EUi has called procedure Px by sending the corresponding data stream to EUj, EUi continues to execute its own program or procedure. However, in some cases, it might be necessary for EUi to wait that EUj has finished to execute procedure Px before being able to execute validly subsequent operations. This might be the case when the the subsequent operations of the program run by EUi are based upon the result of procedure Px executed by EUj. In other words, it is desirable in such cases to provide the possibility to synchronize the calling program with the procedures it has caused to run in parallel on one or several other EUs. We will now describe a method for advantageously achieving such synchronization.

### Synchronization of a calling program run on an EU with the called procedures executed on other EUs

The mentioned synchronization may be advantageously be achieved with help of dedicated tokens and AM 40. One will understand that a token is a data structure with predefined fields and which is to be used with AM 40. The content of the token is set by the calling program. There are three kinds of tokens used by the calling program for achieving the mentioned synchronization.

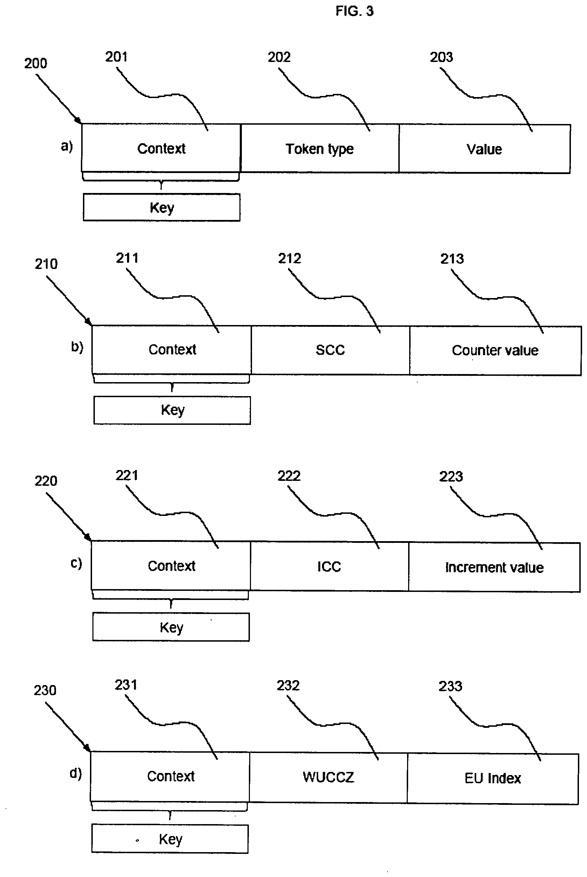

The general structure of these tokens is illustrated in Fig. 3(a) where the token structure is referenced 200. It comprises three fields. A first field 201 contains context information. The context information is used to distinguish synchronization tokens used by the calling program from other tokens in AM 40. The context information is preferably the same as in field 102 of data stream 100 which was detailed in reference to Fig. 2. A second field 202 contains the type of token. The third field 203 contains a value the signification of which depends upon the kind of token.

The first kind of token is called 'SetContextCounter' token, hereafter abbreviated SCC token. Its structure is shown in Fig. 3 (b) in which it is referenced by reference numeral 210. The token identifier in the second field 212 (corresponding to field 202) identifies it as an SCC token. The value in the third field 213 (corresponding to field 203) contains an initial counter value.

The second kind of token is called 'IncContextCounter' token, hereafter abbreviated ICC token. Its structure is shown in Fig. 3 (c) in which it is referenced by reference numeral 220. The token identifier in the second field 222 (corresponding to field 202) identifies it as an ICC token. The value in the third field 213 (corresponding to field 203) contains a value by which the counter value of an SCC token of the same context (i.e. containing the same context information) shall be incremented. One will understand that the value of the ICC token may not only be positive, but also negative so as to be able to decrement the counter value in the SCC token. Alternatively, the ICC token could be limited to contain only a positive value and thus only positively increment the counter value in the SCC token: in this case, it may be provided another type of token based on the general token structure 200 and dedicated to decrementing the counter value in a SCC token.

The third kind of token is called 'WaitUntilContextCounterZero' token, hereafter abbreviated WUCCZ token. Its structure is shown in Fig. 3 (d) in which it is referenced by reference numeral 230. The token identifier in the second field 232 (corresponding to field 202) identifies it as a WUCCZ token. The value in the third field 233 (corresponding to field 203) contains an EU index.

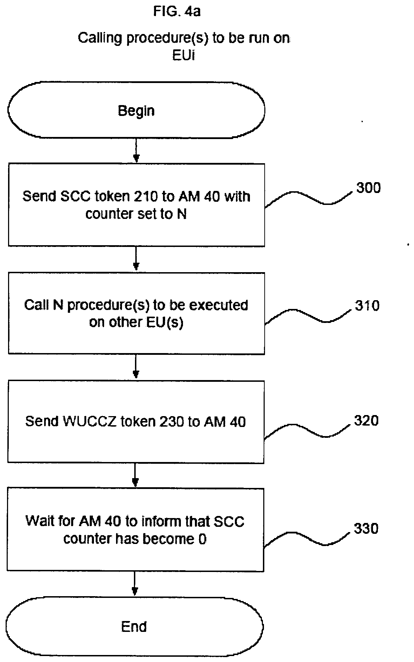

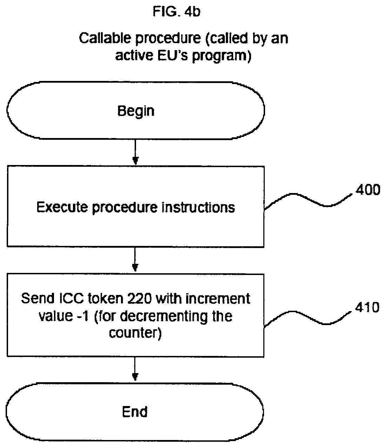

The way synchronization is achieved by means of such tokens is the following and illustrated by the flow charts of Figs 4a and 4b corresponding respectively to the calling program and a called procedure. When the program (or procedure) run on an EU - hereaft er EUi - calls some procedure(s) for execution on other EU(s) and requires to wait until the latter have been executed, this program contains an instruction for causing EUi to send an SCC token 210 to AM 40 prior to calling said procedure(s): see step 300. The initial counter value in the SCC token 210 is set by the program to the number of procedure(s) it will call. In step 300, this number is N. Upon receipt thereof, AM 40 stores the SCC token 40 in it. After sending the SCC token 210, the program goes to the next instructions which consist in causing EUi to call said procedure(s): see step 310. EUi goes then to the next instruction of the program without waiting for the execution of these procedures by the other EUs as already explained. This next instruction consists in causing EUi to send a WUCCZ token 230 to AM 40: see step 320. This WUCCZ token 230 contains in field 233 the index of the calling EU, i.e. index 'i' which is the index of EUi. Upon receipt thereof, AM 40 stores the WUCCZ token 230 in it. Further, the send WUCCZ token instruction causes EUi to stay the execution of its program until it receives a signal of AM 40 informing that all the called procedures have been executed as we will describe further below: see step 330.

On the other hand, the called procedure(s) contain each a final instruction consisting in sending an ICC token 220 with an increment value of -1: see step 410. So, when the procedure is executed by any free EU, the latter executes first the procedure instructions for performing the tasks to which the procedure is dedicated ― see step 400 ― and then sends this ICC token 220 to AM 40 ― see step 410 - and finally stops its operation as it has finished to execute the called procedure; consequently, EUA 30 adds this EU to the list of free EUs.

When receiving an ICC token 220, AM 40 carries out a search through it for identifying tokens stored in it which have the same key as the ICC token 220. The key of the ICC token 220 is the context field 221. Thus, AM 40 retrieves the SCC token 210 previously sent by the calling program which has the same key, i.e. the same context information in field 210. AM 40 adds the increment value -1 in field 223 of the ICC token 220 to the counter value in field 213 of the SCC token 210. In other words, the counter value in field 212 is decremented by one. AM 40 leaves the SCC token 210 stored in it unless the counter value in field 213 becomes zero. As a result, the counter value in field 213 gets decremented as the called procedures are executed by the other EU(s) and finally it is set to zero when all called procedures have been executed. When AM 40 decrements the counter value in field 213 and that as a result, the counter value becomes zero, then AM 40 carries out a search for the same key (i.e. the context information in fields 211 and 221) in order to retrieve the corresponding WUCCZ token 230 (i.e. having the same context information in field 231). AM 40 reads the EU index in field 233 of the WUCCZ token 230 - i.e. index 'i' in our example ― and sends a signal to the corresponding EU ― i.e. EUi in our example ― by which it is informed that all the called procedures have been executed. As a consequence, EUi resumes, i.e. continues the execution of its program by executing the instruction that follows the send WUCCZ token instruction. In other words, synchronization of the calling program with the called procedure(s) is herewith achieved. Further, AM 40 deletes the SCC token 210 and the WUCCZ token 230 in it. One will understand that it is possible to avoid the second search in AM40 for specifically identifying the WUCCZ token 230 if AM 40 is conceived for identifying it and reminding it during the search for the SCC token 210 as it will also retrieve the WUCCZ token 232 during this same search.

### Program example for matrix multiplication

Hereunder is provided in Pascal-like language an example of matrix multiplication program (or procedure) using parallel calculations on different EUs which make use of the synchronization method described above.

```
  Procedure SMult (A, B, C: PMatrix; ARow, BCol, ARank: integer);
  var k: integer;
  begin
  S: = 0;
     For k: = 1 to ARank do s: = S + A ^ [ARow, k] * B ^ [k, BCol];
     C ^ [ARow, BCol]: = S;
     IncContextCounter (@ C, -1); // Send ICC token 221 with key
                                  // {@C} and increment value set to -1
                                  // for decrementing the counter value
                                  // in SCC token 210 in AM 40 which
                                  // has the same key in field 210
  end;
  Procedure MMultParallel (A, B, C: PMatrix; ARank: integer);
  var i, j: integer;
  begin
         // SetContextCounter procedure sends an ACC token 210 with
         // key { 0 , @ C} in field 211, that means:
         // {Procedure address = 0 , Context = address of matrix C} and
         // counter value in field 213 = ARank * ARank
         // Every time when SMult calculates an C [i,j] element, it sends
         // the ICC token 220 which reduces the value of this counter by
         // 1. Once the value will be equal to 0, the routine managing
         // AM 40 finds the WUCCZ token 230 with the same key and
         // containing the index of the halted EU. Then this routine sends
         // a packet to the halted EU, which allows this EU to continue
         // its operation.
     SetContextCounter (@ C, ARank * ARank);
     For i: = 1 to ARank do
         For j: = 1 to ARank do
            SMult (A, B, C, i, j, ARank) on any; // 'on any' means that
                                               // the procedure may be
                                               // called on any free EU
     WaitUntilContextCounterZero (@ C); // This procedure sends a
                                          // WUCCZ token 230 to AM
                                          // 40 with key { 0 , @ C} in
                                          // field 231 and the current
                                          // EU index in field 233 and
                                          // suspends the operation of
                                          // the current EU, until the
                                          // context counter will be
                                          // equal to 0 (all called
                                          // procedures have finished)
  end; // Exit the MMultParallel procedure
```

Although the mentioned synchronization method is advantageously simple, one will understand that other methods for synchronizing a calling program run on an EU with the called procedures executed on other EUs may be implemented. For example, it may be implemented without using AM 40. For doing so, the calling procedure may write a counter value and its processor index at an address in RAM prior to calling the procedures on other EUs. Upon calling the procedure on other EUs, the calling procedure passes this address in RAM to the called procedures so that the latter decrements the counter value in it and signals the calling processor (identified by its processor index in RAM) that all called procedures were executed if the counter value becomes zero. In this latter synchronization method, simultaneous access to the counter should be prevented. A way to achieve it consists in defining a class object which contains properties and methods for use with the counter and messages to the EU and pass the created instance of this object as an additional parameter to the called procedure.

### 2) Procedure call upon data readiness: data flow processing mode

While the described method for making direct calls of procedures on any free (or even specified) EU is based on the control flow principle, DPS 1 may also apply data flow processing method which we will exemplify hereafter.

### Reminder about data flow processing

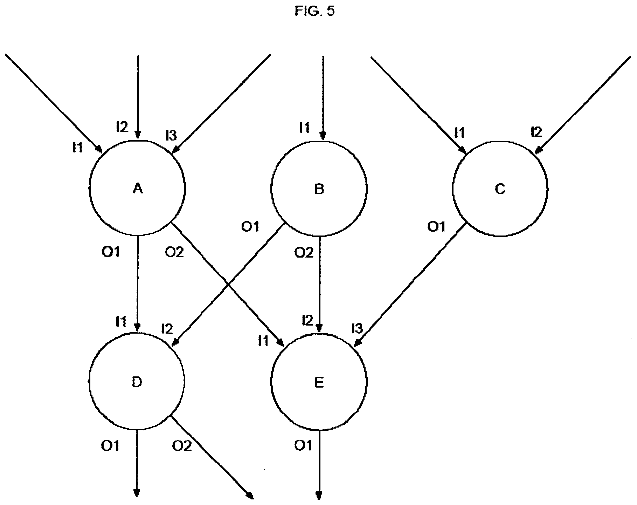

A data flow program is structured as a graph comprising nodes. Fig. 5 illustrates schematically a basic example of such a graph for the ease of explanation. The nodes ― which are referenced a, b, c d, e in Fig. 5 - represent functional units ― hereafter noted FUs - with n inputs and m outputs, n and m being integers. For example, node 'a' has three inputs noted I1, I2, I3 and two outputs noted O1 and O2. Node 'b' has a single input noted I1 and two outputs noted O1 and O2. As soon as the data are available on all the inputs of such a node or FU, it executes its program ― which makes use of the data at its inputs - and propagates the results to its outputs. The FU is implemented in the form of a procedure the formal parameters of which are the inputs of the node, and the outputs are calculated in the body of the procedure. The outputs of a node are provided to the input of other nodes as depicted by the arrows in Fig. 2. These nodes execute in turn their own program once all required data are available on their inputs and so on. One will understand that the execution order of the procedures does not matter, only the availability of data on the inputs of the node or FU does.

### Practical implementation of data flow program thereof

The practical implementation of the mentioned dataflow processing principle thereof according to the invention relies on two principles as was the case in WO 2006/131297.

First, the procedure corresponding to a node of the data flow program may be executed on any free EU of DPS 1. Second, AM 40 is used for determining whether all required data to be input to a node of the data flow program are available and if so, it calls the corresponding procedure node for execution on any free EU and provides it with the required input data.

Therefore, the data outputted by a node and which are required as an input for another node are provided by the EU executing the node procedure in the form of a token the structure of which is the one already-described for the data stream 100 in reference to Fig. 2. However, this EU does not send this token to a free or specified processor as is the case for a direct procedure call described above, but it sends the token to AM 40. The managing routine of AM 40 then checks whether other token(s) are stored in it which have the same key and contain other input data required for the other node. The key of the token 100 may be defined as corresponding to fields 101 and 102 containing respectively the node procedure address and context information. If AM 40 determines that not all required input data are available to it for a node procedure, then it stores the received token in it. Once AM 40 determines that all required input data are available to it for a node procedure, it forms a data stream which contains the node procedure address and all the input data for this node, i.e. all required node procedure parameters. Again, this data stream has the structure shown in Fig. 2. AM 40 causes then any free EU to execute this node procedure by sending it this data stream via IA 20. One will understand that if AM 40 is software implemented, it is the EU that wants to sends a token to AM 40 that calls the managing routine of AM 40 for executing it itself or for executing it on any free EU by carrying out a direct call as described earlier. In case AM 40 is made of hardware module(s), a free EU is selected with the help of EUA 30 in the same way as was explained for EUs.

As already mentioned, WO 2006/131297 describes an implementation of data flow processing based on the same general principle, however it does it specifically with hardware associative memory modules and by imposing a predetermined format of tokens, i.e. a predetermined length for the key field and for the data field and by limiting the number of inputs for a node to two.

These limitations may be advantageously overcome by implementing AM 40 in software, i.e. as a so called pseudo-associative memory (PAM), as was mentioned earlier. Using PAM allows to solve the overflow problem and related deadlocks that are faced when using hardware associative memory modules because PAM allows to define e.g. an arbitrarily large size of hash table in the case a hash algorithm is used for carrying out the content based search function of the associative memory. As a result, it is not required to implement a content discharge function for the associative memory for preventing overflow problems and deadlocks as taught by WO 2006/131297 for hardware implemented associative memory.

Further, the user can advantageously define the structure of a token 100 in any way desirable and also can implement his own algorithm of associative memory work logic. For example, one can implement dataflow graph nodes with an arbitrary number of inputs. Of course, software implementation of associative memory works significantly slower than hardware associative memory, but the disclosed architecture facilitates capabilities of automatic parallelization on the level of nodes. It is nevertheless efficient in the case the time of search in the associative memory is a lot less than the time of execution of the node program. And there are a lot of such cases: matrix operations, Fourier transformations, digital signal processing, differential equation solving, etc. Optionally, in addition to making use of PAM, one or several hardware associative memory module(s) may be added to the architecture which may e.g. be connected to IA 20. The hardware associative memory module(s) may be used for providing accelerated execution of some node procedures, preferably small node procedures for which it is desirable to increase the execution speed.

One will understand that the program and procedures, inclusively the managing routine handing the PAM, that are run or called by the EUs of DPS 1 are stored in RAM 10.

According to the invention, it is possible to define procedure libraries, such as the matrix multiplication procedure exemplified above. Such procedure libraries allow complete concealment of parallel execution from the user. For the user, the whole process looks like a simple call of a procedure. The user may not even know the number of EUs involved in the execution of his program.

As explained, the invention advantageously provides for automatic parallelization on the procedure level. Further, it is provided the possibility to execute programs according to either a control flow mode or a data flow mode or to mix both modes of operation. Further, there is no need for rewriting software for existing multiprocessing systems, as software written for the processor being used as execution unit can be used unmodified, providing additional flexibility. One will understand that the invention may be implemented on the basis of any multiprocessor system with logically shared memory, e.g. SMPs, NUMAs, etc. It may be implemented in FGPA technology such as those available from Xilinx Inc. or in ASIC technology.

To implement the invention principles, existing SMP or NUMA systems require relatively simple hardware changes. In fact, it is even possible to do so without hardware changes and implement IA 20, EUA 30, AM 40 in software, being reminded that in existing SMPs or NUMAs, executive units cannot send data directly to each other, but only through the shared RAM. IA 20 might be implemented in software by using sockets or mailboxes. For example, EUs may be interconnected by using TCP sockets: starting a thread on each EU that will listen its own port, and upon receiving a message through it the thread would call a procedure identified in the message. Arbitrage of free threads can also be implemented in software: in this case, the numbers (ports) of free threads will be kept in common shared memory. The thread that wants to execute a procedure on another thread will first call the arbitrage procedure (function) that returns a number (port) of a free receiving thread. Then the thread sends a data stream to the receiving thread that will get the procedure identified in the stream and execute it. If there are no free threads available, the sending thread may execute the procedure itself. After the completion of the procedure execution, the thread will send its number (port) to the pool of free threads in the shared memory. A drawback of such software implementation of IA 20 and EUA is the amount of overhead costs needed for calling a procedure. Indeed, the time needed for calling a procedure on another EU is substantially increased. For this reason, it is preferred that IA 20 and EUA 30 are implemented as hardware entities distinct from the EUs of DPS 1.

The invention has been described with reference to preferred embodiments. However, many variations are possible within the scope of the invention. Further, one will understand from the above description that the different aspects of the invention may result in various advantageous over existing parallel data processing technologies.

In particular, with respect to existing SMPs, the bottleneck in scalability may be avoided by providing different interconnection possibilities each suiting its own system configuration. The programming difficulties due to necessity of programming both the CPUs and the interconnect logic are avoided as the user does not need to program the interconnect logic, but only the program to be executed. The necessity to not only partition the workload, but also to comprehend the memory locality is avoided as they may be taken care of automatically. There is no need for system programmers to build support for SMP into the operating system for preventing that the system functions as a uniprocessor system. In fact, the invention does not require any operating system whatsoever in order to use the CPUs in an efficient way. Further, the invention does not require to add complexity to the instruction set of e.g. an existing system that is adapted so as to implement the invention. Further, the invention does not add complexity for the user to write code.

Similarly, the invention does not add significant complexity to the compiler for the system ― unlike in the existing VLIW approaches - as only the token operations are added which are of limited number. Similarly, the invention does not add anything overly complex to the grammar of the used language. Even already existing programs may be run without problem.

Regarding the hardware aspect, the invention provides for a fairly elegant and non-complex solution to automatic parallelization compared to fully-hardware CAM-based dataflow systems and complex SMP branch prediction, dependency checking and instruction parallelism checking.

Compared to NUMA, the invention does not require any complex multi-layer caches and mechanisms for eliminating starvation of remote CPUs. Further, it does not add any complexity of code needed for operation like NUMA systems do.

Compared to existing dataflow systems, including the one disclosed in RU 2 281 546 C1, the invention provides for an easy solution for overcoming the disadvantages already mentioned of hardware associative memories. Further, different type of interconnection arrangements may be used for suiting different needs.

## Claims

1. A data processing system, comprising:
- shared memory comprising a RAM memory (10) for storing procedures,
- a plurality of executive units (EUs) each having access to the shared memory and being adapted to execute procedures based on the control flow principle which are stored in the shared memory,
- an interconnection arrangement (20) for connecting any executive unit to any other executive unit so that the executive unit can send data to the other executive unit,
- an executive unit arbiter (30) for:
- holding up to date a list of free executive units,
- providing an index of a free executive unit upon a request sent by an executive unit, and
- removing from the list the executive unit corresponding to the index provided in reply to the request and adding said executive unit back to the list when said executive unit is free again, and
- an associative memory (40),
wherein the data processing system is adapted to carry out data flow-based information processing based on software procedures each of which are based on the control flow principle and causes an executive unit (EUi) executing it to produce data to be used as a parameter for the execution of at least one other of said procedures, each of said procedures causing an executive unit (EUi) executing it to send to the associative memory (40) one or more tokens (100), each token containing at least a key (101, 102), a procedure identifier (101) that may be part of the key and at least part of the produced data (103), said at least part of the produced data being a parameter for the execution of one of said procedures which corresponds to the procedure identifier (101),
wherein the data processing system is adapted to carry out said data flow-based information processing based on software procedures and to automatically parallelize the execution of said procedures by the fact that the associative memory (40) is configured to:
- search through the associative memory (40) for identifying tokens based on the key of the token provided by the executive unit (EUi),
- to store the provided token (100) in the associative memory if the procedure identified by the procedure identifier (101) in the provided token is to be called with at least another parameter to be provided by a matching token which is not found in the associative memory (40), and
- to send a data stream containing the procedure identifier and all the required parameters to any free executive unit in cooperation with the executive unit arbiter (30) if one or several matching tokens are found and that the data contained in the provided token (100) and in the matching token(s) provide all of the parameters required for the execution of the procedure corresponding to the procedure identifier (101) in the provided token (100), the data processing system being further arranged to cause the free executive unit receiving the data stream to call the procedure corresponding to the procedure identifier (101) in the data stream and to execute said procedure with the parameters in the data stream.

2. The data processing system according to claim 1, wherein the associative memory (40) is a hardware associative memory, or a pseudo-associative memory, or a combination thereof.

3. The data processing system according to claim 2, wherein the pseudo-associative memory is implemented in the RAM memory.

4. The data processing system according to claim 2, wherein the hardware associative memory is connected to the interconnection arrangement (20).

5. The data processing system according to any one of claims 1 to 4, wherein the procedure identifier contained in each token is the address in the RAM memory (10) of the procedure corresponding to the procedure identifier.

6. The data processing system according to any one of claims 1 to 5, wherein the data processing system is further arranged for enabling a procedure executed on any executive unit (EUi) to cause this executive unit to call another procedure on any other free executive unit (EUj) in cooperation with the executive unit arbiter (30) by sending a data stream to the other free executive unit (EUj) identified by the executive unit arbiter (30) wherein the data stream contains a procedure identifier of the other procedure and the parameters required for the execution of the other procedure.

7. A method of data flow-based information processing in a data processing system, wherein the data processing system comprises:
- a plurality of executive units (EUs) and shared memory (10) comprising RAM memory, each executive unit having access to the shared memory and being adapted to execute processing instructions of software procedures based on the control flow principle which are stored in the shared memory;
- an interconnection arrangement (20) for connecting any executive unit to any other executive unit so that the executive unit can send data to the other executive unit;
- an executive unit arbiter (40) for:
- holding up to date a list of free executive units,
- providing an index of a free executive unit upon a request sent by an executive unit, and
- removing from the list the executive unit corresponding to the index provided in reply to the request and adding said executive unit back to the list when said executive unit is free again, and
wherein:
- the data flow-based information processing is based on software procedures, each procedure being based on the control flow principle and causing the executive unit (EUi) executing it to produce data to be used as a parameter for the execution of at least one other procedure; and
- automatic parallelization of tasks on the procedure level is provided by using an associative memory (40) for determining whether all parameters required for the execution of any of said procedures are available and if so, calling the corresponding procedure for execution on any free executive unit (EUj) and providing it with the required parameters, wherein:
o each of said procedures causes the executive unit executing it to send to the associative memory (40) one or more tokens (100), each token containing at least a key (101, 102), a procedure identifier (101) that may be part of the key and at least part of the produced data (103), said at least part of the produced data being a parameter for the execution of one of said procedures which corresponds to the procedure identifier (101); and
o the associative memory (40) searches through the associative memory for identifying tokens based on the key of the token provided by the executive unit (EUi), and:
▪ if one or several matching tokens are found and that the data contained in the provided token and in the matching token(s) provide all of the parameters required for the execution of the procedure corresponding to the procedure identifier (101) in the provided token (100), then the associative memory sends a data stream containing the procedure identifier (101) and all the required parameters to any free executive unit (EUj) in cooperation with the executive unit arbiter (30), wherein the free executive unit (EUj) receiving the data stream calls the procedure corresponding to the procedure identifier in the data stream and executes said procedure with the parameters in the data stream; and
▪ the associative memory (40) stores the provided token (100) in the associative memory if the procedure identified by the procedure identifier (101) in the provided token is to be called with at least another parameter to be provided by a matching token which is not found in the associative memory (40).

8. The method according to claim 7, wherein the associative memory (40) is a hardware associative memory, or a pseudo-associative memory, or a combination thereof.

9. The method according to claim 7, wherein:
- a software routine is provided for implementing and managing the associative memory in the RAM memory; and
- each of said procedures causes the executive unit (EUi) executing it to call the associative memory routine with said one or more tokens (100) as a parameter for the execution of the associative memory routine, the associative memory routine causing the executive unit executing it to perform the mentioned operations of the associative memory.

10. The method according to any one of claims 7 to 9, wherein the procedure identifier (101) contained in said one or more tokens is the address of the corresponding procedure in the RAM memory (10).

11. A software for a data processing system according to any one of claims 1 to 6, wherein the software comprises software procedures which are each based on the control flow principle, the software being arranged so that when run on the data processing system, the software procedures causes the data processing system to carry out the method according to any one of claims 7 to 10 in cooperation with the associative memory of the data processing system.

12. The software according to claim 11, which is further arranged so that when run on the data processing system, the software implements the associative memory (40) used by the method according to any one of claims 7 to 10 in the form of a pseudo-associative memory in the RAM memory of the data processing system.

## Patentansprüche

1. Datenverarbeitungssystem, umfassend:
- einen gemeinsam genutzten Speicher mit einem RAM-Speicher (10) zum Speichern von Prozeduren,
- eine Vielzahl von Ausführungseinheiten (EUs), die jeweils Zugriff auf den gemeinsam genutzten Speicher haben und eingerichtet sind, Prozeduren, basieren auf dem in dem gemeinsam genutzten Speicher gespeicherten Kontrollflußprinzip auszuführen,
- eine Wechselverbindungsanordnung (20) zum Verbinden einer Ausführungseinheit mit einer anderen Ausführungseinheit, so dass die Ausführungseinheit Daten an die andere Ausführungseinheit senden kann,
- einen Ausführungseinheit-Arbiter (30) zum:
- Halten einer Liste freier Ausführungseinheiten auf dem neuesten Stand,
- Bereitstellen eines Index einer freien Ausführungseinheit auf eine von einer Ausführungseinheit gesendete Anforderung hin, und
- Entfernen der Ausführungseinheit, die dem als Antwort auf die Anforderung gelieferten Index entspricht, aus der Liste und Hinzufügen der Ausführungseinheit zurück zur Liste, wenn die Ausführungseinheit wieder frei ist, und
- einen Assoziativspeicher (40),
wobei das Datenverarbeitungssystem eingerichtet ist, eine datenflussbasierte Informationsverarbeitung auf der Grundlage von Software-Prozeduren durchzuführen, von denen jede auf dem Kontrollflussprinzip basiert und eine Ausführungseinheit (EUi), die sie ausführt, veranlasst, Daten zu erzeugen, die als Parameter für die Ausführung mindestens einer anderen der Prozeduren zu verwenden sind, wobei jede der Prozeduren eine sie ausführende Ausführungseinheit (EUi) veranlasst, einen oder mehrere Token (100) an den Assoziativspeicher (40) zu senden, wobei jedes Token mindestens einen Schlüssel (101, 102), eine Prozedurenkennung (101), die Teil des Schlüssels sein kann, und mindestens einen Teil der erzeugten Daten (103) enthält, wobei der mindestens eine Teil der erzeugten Daten ein Parameter für die Ausführung einer der Prozeduren ist, die der Prozedurenkennung (101) entspricht, wobei das Datenverarbeitungssystem eingerichtet ist, die datenflussbasierte Informationsverarbeitung auf der Grundlage von Software-Prozeduren auszuführen und die Ausführung der Prozeduren automatisch zu parallelisieren durch die Tatsache, dass der Assoziativspeicher (40) konfiguriert ist, um:
- den Assoziativspeicher (40) zu durchsuchen, um Token zu identifizieren, basierend auf dem Schlüssel des Tokens, der von der Ausführungseinheit (EUi) bereitgestellt ist/wird,
- das bereitgestellte Token (100) in dem Assoziativspeicher zu speichern, wenn die Prozedur, die durch die Prozedurenkennung (101) in dem bereitgestellten Token identifiziert ist/wird, mit mindestens einem weiteren Parameter aufgerufen werden soll, der durch ein passendes Token bereitgestellt ist/wird, das nicht in dem Assoziativspeicher (40) gefunden ist/wird, und
- einen Datenstrom, der die Prozedurenkennung und alle erforderlichen Parameter enthält, im Zusammenwirken mit dem Arbiter (30) der Exekutiveinheit an eine beliebige freie Exekutiveinheit zu senden, wenn ein oder mehrere übereinstimmende Token gefunden sind/werden und die in dem bereitgestellten Token (100) und in dem/den übereinstimmenden Token enthaltenen Daten alle für die Ausführung der Prozedur, die der Prozedurenkennung (101) in dem bereitgestellten Token (100) entspricht, erforderlichen Parameter bereitstellen, wobei das Datenverarbeitungssystem ferner eingerichtet ist, um die freie Ausführungseinheit, die den Datenstrom empfängt, zu veranlassen, die Prozedur, die der Prozedurenkennung (101) in dem Datenstrom entspricht, aufzurufen und die Prozedur mit den Parametern in dem Datenstrom auszuführen.

2. Datenverarbeitungssystem nach Anspruch 1, bei welchem der Assoziativspeicher (40) ein Hardware-Assoziativspeicher oder ein Pseudo-Assoziativspeicher oder eine Kombination davon ist.

3. Datenverarbeitungssystem nach Anspruch 2, bei welchem der Pseudo-Assoziativspeicher in dem RAM-Speicher implementiert ist.

4. Datenverarbeitungssystem nach Anspruch 2, bei welcher der Hardware-Assoziativspeicher mit der Wechselverbindungsanordnung (20) verbunden ist.

5. Datenverarbeitungssystem nach einem der Ansprüche 1 bis 4, bei welchem die in jedem Token enthaltene Prozedurenkennung die Adresse der der Prozedurenkennung entsprechenden Prozedur im RAM-Speicher (10) ist.

6. Datenverarbeitungssystem nach einem der Ansprüche 1 bis 5, bei welchem das Datenverarbeitungssystem ferner eingerichtet ist, eine auf einer beliebigen Ausführungseinheit (EUi) ausgeführte Prozedur in die Lage zu versetzen, diese Ausführungseinheit zu veranlassen, eine andere Prozedur auf einer anderen freien Ausführungseinheit (EUj) im Zusammenwirken mit dem Ausführungseinheits-Arbiter (30) aufzurufen, indem ein Datenstrom an die andere freie Ausführungseinheit (EUj) gesendet wird, die von dem Ausführungseinheits-Arbiter (30) identifiziert ist/wird, wobei der Datenstrom eine Prozedurenkennung der anderen Prozedur und die für die Ausführung der anderen Prozedur erforderlichen Parameter enthält.

7. Verfahren zur datenflussbasierten Informationsverarbeitung in einem Datenverarbeitungssystem, bei welchem das Datenverarbeitungssystem umfasst:
- eine Vielzahl von Ausführungseinheiten (EUs) und einen gemeinsam genutzten Speicher (10), der einen RAM-Speicher umfasst, wobei jede Ausführungseinheit Zugriff auf den gemeinsam genutzten Speicher hat und eingerichtet ist, Verarbeitungsanweisungen von Software-Prozeduren auszuführen, die auf dem Steuerflussprinzip basieren und in dem gemeinsam genutzten Speicher gespeichert sind;
- eine Wechselverbindungsanordnung (20) zum Verbinden einer Ausführungseinheit mit einer anderen Ausführungseinheit, so dass die Ausführungseinheit Daten an die andere Ausführungseinheit senden kann;
- einen Ausführungseinheit-Arbiter (40) zum:
- Halten einer Liste freier Ausführungseinheiten auf dem neuesten Stand
- Bereitstellen eines Index einer freien Ausführungseinheit auf eine von einer Ausführungseinheit gesendete Anforderung hin, und
- Entfernen der Ausführungseinheit, die dem als Antwort auf die Anforderung bereitgestellten Index entspricht, aus der Liste und Hinzufügen der Ausführungseinheit zurück zur Liste, wenn die Ausführungseinheit wieder frei ist, und
wobei:
- die datenflussbasierte Informationsverarbeitung auf Software-Prozeduren basiert, wobei jede Prozedur auf dem Kontrollflussprinzip basiert und die sie ausführende Ausführungseinheit (EUi) veranlasst, Daten zu erzeugen, die als Parameter für die Ausführung mindestens einer anderen Prozedur verwendet werden; und
- eine automatische Parallelisierung von Aufgaben auf der Prozedurenebene bereitgestellt wird, indem ein Assoziativspeicher (40) verwendet wird, um zu bestimmen, ob alle für die Ausführung einer der Prozeduren erforderlichen Parameter verfügbar sind, und wenn dies der Fall ist, die entsprechende Prozedur zur Ausführung auf einer freien Ausführungseinheit (EUj) aufzurufen und sie mit den erforderlichen Parametern zu versorgen, wobei:
o jede der Prozeduren die Ausführungseinheit, die sie ausführt, veranlasst, einen oder mehrere Token (100) an den Assoziativspeicher (40) zu senden, wobei jedes Token mindestens einen Schlüssel (101, 102), eine Prozedurenkennung (101), der Teil des Schlüssels sein kann, und mindestens einen Teil der erzeugten Daten (103) enthält, wobei der mindestens eine Teil der erzeugten Daten ein Parameter für die Ausführung einer der Prozeduren ist, der Prozedurenkennung (101) entsprechend; und
∘ der Assoziativspeicher (40) den Assoziativspeicher zur Identifizierung von Token auf der Basis des Schlüssels des Tokens, der von der Ausführungseinheit (EUi) bereitgestellt wird, durchsucht, und:
▪ wenn ein oder mehrere übereinstimmende Token gefunden werden und die in dem bereitgestellten Token und in dem/den übereinstimmenden Token enthaltenen Daten alle für die Ausführung der Prozedur, die der Prozedurenkennung (101) in dem bereitgestellten Token (100) entspricht, erforderlichen Parameter bereitstellen, dann sendet der Assoziativspeicher einen Datenstrom, der die Prozedurenkennung (101) und alle erforderlichen Parameter enthält, an eine freie Ausführungseinheit (EUj) im Zusammenwirken mit dem Ausführungseinheits-Arbiter (30), wobei die freie Ausführungseinheit (EUj), die den Datenstrom empfängt, die Prozedur aufruft, der Prozedurenkennung in dem Datenstrom entsprechend, und die Prozedur mit den Parametern in dem Datenstrom ausführt; und
▪ der Assoziativspeicher (40) das bereitgestellte Token (100) in dem Assoziativspeicher speichert, wenn die Prozedur, die durch die Prozedurenkennung (101) in dem bereitgestellten Token identifiziert wird, mit mindestens einem weiteren Parameter aufgerufen werden soll, der durch ein passendes Token bereitgestellt wird, das nicht in dem Assoziativspeicher (40) gefunden wird.

8. Verfahren nach Anspruch 7, bei welchem der Assoziativspeicher (40) ein Hardware-Assoziativspeicher oder ein Pseudo-Assoziativspeicher oder eine Kombination davon ist.

9. Verfahren nach Anspruch 7, bei welchem:
- eine Softwareroutine zum Implementieren und Verwalten des Assoziativspeichers in dem RAM-Speicher vorgesehen ist; und
- jede der Prozeduren die sie ausführende Ausführungseinheit (EUi) veranlasst, die Assoziativspeicherroutine mit dem einen oder den mehreren Token (100) als Parameter für die Ausführung der Assoziativspeicherroutine aufzurufen, wobei die Assoziativspeicherroutine die sie ausführende Ausführungseinheit veranlasst, die erwähnten Operationen des Assoziativspeichers durchzuführen.

10. Verfahren nach einem der Ansprüche 7 bis 9, bei welchem die in dem einen oder den mehreren Token enthaltene Prozedurenkennung (101) die Adresse der entsprechenden Prozedur im RAM-Speicher (10) ist.

11. Software für ein Datenverarbeitungssystem nach einem der Ansprüche 1 bis 6, wobei die Software Software-Prozeduren umfasst, die jeweils auf dem Kontrollflussprinzip basieren, wobei die Software eingerichtet ist, damit die Software-Prozeduren, wenn sie auf dem Datenverarbeitungssystem ausgeführt werden, das Datenverarbeitungssystem veranlassen, das Verfahren nach einem der Ansprüche 7 bis 10 im Zusammenwirken mit dem Assoziativspeicher des Datenverarbeitungssystems auszuführen.

12. Software nach Anspruch 11, die ferner eingerichtet ist, damit die Software, wenn sie auf dem Datenverarbeitungssystem ausgeführt wird, den von dem Verfahren nach einem der Ansprüche 7 bis 10 verwendeten Assoziativspeicher (40) in Form eines Pseudo-Assoziativspeichers in dem RAM-Speicher des Datenverarbeitungssystems implementiert.

## Revendications

1. Système de traitement de données, comprenant :
- une mémoire partagée comprenant une mémoire RAM (10) pour stocker des procédures,
- une pluralité d'unités d'exécution (EUs) ayant chacune accès à la mémoire partagée et étant adaptées pour exécuter des procédures basées sur le principe du flux de commande qui sont stockées dans la mémoire partagée,
- un dispositif d'interconnexion (20) pour connecter toute unité d'exécution à toute autre unité d'exécution de manière que l'unité d'exécution puisse envoyer des données à l'autre unité d'exécution,
- un arbitre des unités d'exécution (30) pour :
- maintenir à jour une liste d'unités d'exécution libres,
- fournir un index d'une unité d'exécution libre sur requête envoyée par une unité d'exécution, et
- retirer de la liste l'unité d'exécution correspondant à l'index fourni en réponse à la requête et ajouter à nouveau ladite unité d'exécution à la liste lorsque ladite unité d'exécution est à nouveau libre, et
- une mémoire associative (40),
dans lequel le système de traitement de données est adapté pour effectuer un traitement d'informations basé sur le flux de données sur la base de procédures logicielles dont chacune est basée sur le principe du flux de commande et amène une unité exécutive (EUi) qui l'exécute à produire des données à utiliser comme paramètre pour l'exécution d'au moins une autre desdites procédures, chacune desdites procédures amenant une unité exécutive (EUi) l'exécutant à envoyer à la mémoire associative (40) un ou plusieurs jetons (100), chaque jeton contenant au moins une clé (101, 102), un identifiant de procédure (101) qui peut faire partie de la clé et au moins une partie des données produites (103), ladite au moins une partie des données produites étant un paramètre pour l'exécution de l'une desdites procédures qui correspond à l'identifiant de procédure (101),
dans lequel le système de traitement de données est adapté pour effectuer ledit traitement d'informations basé sur le flux de données sur la base de procédures logicielles et pour paralléliser automatiquement l'exécution desdites procédures par le fait que la mémoire associative (40) est configurée pour :
- rechercher dans la mémoire associative (40) pour identifier des jetons sur la base de la clé du jeton fourni par l'unité d'exécution (EUi),
- stocker le jeton fourni (100) dans la mémoire associative si la procédure identifiée par l'identifiant de procédure (101) dans le jeton fourni doit être appelée avec au moins un autre paramètre à fournir par un jeton correspondant qui n'est pas trouvé dans la mémoire associative (40), et
- pour envoyer un flux de données contenant l'identifiant de procédure et tous les paramètres requis à une unité d'exécution libre quelconque en coopération avec l'arbitre des unités d'exécution (30) si un ou plusieurs jetons correspondants sont trouvés et que les données contenues dans le jeton fourni (100) et dans le ou les jetons correspondants fournissent tous les paramètres requis pour l'exécution de la procédure correspondant à l'identifiant de procédure (101) dans le jeton fourni (100), le système de traitement de données étant en outre agencé pour amener l'unité d'exécution libre recevant le flux de données à appeler la procédure correspondant à l'identifiant de procédure (101) dans le flux de données et à exécuter ladite procédure avec les paramètres dans le flux de données.

2. Système de traitement de données selon la revendication 1, dans lequel la mémoire associative (40) est une mémoire associative matérielle, ou une mémoire pseudo-associative, ou une combinaison de celles-ci.

3. Système de traitement de données selon la revendication 2, dans lequel la mémoire pseudo-associative est mise en œuvre dans la mémoire RAM.

4. Système de traitement de données selon la revendication 2, dans lequel la mémoire associative matérielle est connectée au dispositif d'interconnexion (20).

5. Système de traitement de données selon l'une quelconque des revendications 1 à 4, dans lequel l'identifiant de procédure contenu dans chaque jeton est l'adresse dans la mémoire RAM (10) de la procédure correspondant à l'identifiant de procédure.

6. Système de traitement de données selon l'une quelconque des revendications 1 à 5, dans lequel le système de traitement de données est en outre agencé pour permettre à une procédure exécutée sur une unité d'exécution quelconque (EUi) d'amener cette unité d'exécution à appeler une autre procédure sur une autre unité d'exécution libre quelconque (EUj) en coopération avec l'arbitre des unités d'exécution (30) en envoyant un flux de données à l'autre unité d'exécution libre (EUj) identifiée par l'arbitre des unités d'exécution (30), dans lequel le flux de données contient un identifiant de procédure de l'autre procédure et les paramètres requis pour l'exécution de l'autre procédure.

7. Procédé de traitement d'informations basé sur le principe du flux de données dans un système de traitement de données, dans lequel le système de traitement de données comprend :
- une pluralité d'unités d'exécution (EU) et une mémoire partagée (10) comprenant une mémoire RAM, chaque unité d'exécution ayant accès à la mémoire partagée et étant adaptée pour exécuter des instructions de traitement de procédures logicielles basées sur le principe du flux de commande qui sont stockées dans la mémoire partagée ;
- un dispositif d'interconnexion (20) pour connecter toute unité d'exécution à toute autre unité d'exécution de manière que l'unité d'exécution puisse envoyer des données à l'autre unité d'exécution ;
- un arbitre des unités d'exécution (40) pour :
- maintenir à jour une liste d'unités d'exécution libres,
- fournir un index d'une unité d'exécution libre sur requête envoyée par une unité d'exécution, et
- retirer de la liste l'unité d'exécution correspondant à l'index fourni en réponse à la requête et ajouter à nouveau ladite unité d'exécution à la liste lorsque ladite unité d'exécution est à nouveau libre, et
dans lequel :
- le traitement d'informations basé sur le flux de données est basé sur des procédures logicielles, chaque procédure étant basée sur le principe du flux de commande et amenant l'unité d'exécution (EUi) qui l'exécute à produire des données à utiliser comme paramètre pour l'exécution d'au moins une autre procédure ; et
- la parallélisation automatique des tâches au niveau des procédures est assurée en utilisant une mémoire associative (40) pour déterminer si tous les paramètres requis pour l'exécution de l'une quelconque desdites procédures sont disponibles et, si c'est le cas, en appelant la procédure correspondante pour l'exécution sur une unité d'exécution libre quelconque (EUj) et en lui fournissant les paramètres requis, dans lequel :
o chacune desdites procédures amène l'unité d'exécution qui l'exécute à envoyer à la mémoire associative (40) un ou plusieurs jetons (100), chaque jeton contenant au moins une clé (101, 102), un identifiant de procédure (101) qui peut faire partie de la clé et au moins une partie des données produites (103), ladite au moins une partie des données produites étant un paramètre pour l'exécution de l'une desdites procédures qui correspond à l'identifiant de procédure (101) ; et
∘ la mémoire associative (40) effectue une recherche dans la mémoire associative pour identifier des jetons sur la base de la clé du jeton fournie par l'unité d'exécution (EUi), et :
• si un ou plusieurs jetons correspondants sont trouvés et que les données contenues dans le jeton fourni et dans le ou les jetons correspondants fournissent tous les paramètres requis pour l'exécution de la procédure correspondant à l'identifiant de procédure (101) dans le jeton fourni (100), alors la mémoire associative envoie un flux de données contenant l'identifiant de procédure (101) et tous les paramètres requis à une unité exécutive libre quelconque (EUj) en coopération avec l'arbitre des unités d'exécution (30), dans lequel l'unité d'exécution libre (EUj) recevant le flux de données appelle la procédure correspondant à l'identifiant de procédure dans le flux de données et exécute ladite procédure avec les paramètres dans le flux de données ; et
• la mémoire associative (40) stocke le jeton fourni (100) dans la mémoire associative si la procédure identifiée par l'identifiant de procédure (101) dans le jeton fourni doit être appelée avec au moins un autre paramètre à fournir par un jeton correspondant qui n'est pas trouvé dans la mémoire associative (40).

8. Procédé selon la revendication 7, dans lequel la mémoire associative (40) est une mémoire associative matérielle, ou une mémoire pseudo-associative, ou une combinaison de celles-ci.

9. Procédé selon la revendication 7, dans lequel :
- une routine logicielle est prévue pour mettre en œuvre et gérer la mémoire associative dans la mémoire RAM ; et
- chacune desdites procédures amène l'unité d'exécution (EUi) qui l'exécute à appeler la routine de mémoire associative avec ledit un ou plusieurs jetons (100) comme paramètre pour l'exécution de la routine de mémoire associative, la routine de mémoire associative amenant l'unité d'exécution qui l'exécute à effectuer les opérations mentionnées de la mémoire associative.

10. Procédé selon l'une quelconque des revendications 7 à 9, dans lequel l'identifiant de procédure (101) contenu dans ledit un ou plusieurs jetons est l'adresse de la procédure correspondante dans la mémoire RAM (10).

11. Logiciel pour un système de traitement de données selon l'une quelconque des revendications 1 à 6, dans lequel le logiciel comprend des procédures logicielles qui sont chacune basées sur le principe du flux de commande, le logiciel étant agencé de manière que, lorsqu'il est exécuté sur le système de traitement de données, les procédures logicielles amènent le système de traitement de données à exécuter le procédé selon l'une quelconque des revendications 7 à 10 en coopération avec la mémoire associative du système de traitement de données.

12. Logiciel selon la revendication 11, qui est en outre agencé de manière que lorsqu'il est exécuté sur le système de traitement de données, le logiciel mette en œuvre la mémoire associative (40) utilisée par le procédé selon l'une quelconque des revendications 7 à 10 sous la forme d'une mémoire pseudo-associative dans la mémoire RAM du système de traitement de données.
